Europäisches Patentamt

European Patent Office  (11) Publication number: **0 008 281**

Office européen des brevets  **A1**

(12) **EUROPEAN PATENT APPLICATION**

(21) Application number: **79850064.1**

(22) Date of filing: **29.06.79**

(51) Int. Cl.³: **F 01 N 1/06,** F 01 N 1/00, F 02 B 27/04

(30) Priority: **29.06.78 CH 7205/78**

(71) Applicant: **Andersson, Jan, 16 Bandyvägen, S-175 45 Järfälla (SE)**
Applicant: **Helger, Marie Louise, 11a Bergmästaregatan, S-981 00 Kiruna (SE)**

(43) Date of publication of application: **20.02.80 Bulletin 80/4**

(72) Inventor: **Andersson, Louis, 73 Götgatan, S-116 62 Stockholm (SE)**

(74) Representative: **Onn, Christer et al, AB STOCKHOLMS PATENTBYRA, Zacco & Bruhn P.O. Box 3129, S-103 62 Stockholm (SE)**

(84) Designated Contracting States: **BE IT NL**

(54) **Exhaust system for a pulsating heat source.**

㊿ The invention relates to an exhaust system distinguished by a low content of passing through impurities and a low sound level and being intended for a pulsating heat source, especially an internal combustion engine. The exhaust gases from the different cylinders in such an engine (1) are led through equally long partial pipes (9) in a manifold (10) to a junction of said partial pipes, where an exhaust pipe (12) uniform in wall thickness and in diameter is attached. Said exhaust pipe is terminated by an annular gable (13). In a hole in said gable an inner pipe (14) is gas-tightly inserted into the exhaust pipe (12). The length of the parts of the exhaust system is tuned so that three kinds of standing waves arise. One of said waves is a negative pressure wave, beginning at about the bottom dead centre of a piston (5) in the engine (1) and terminating at the in-side end (15) of the inner pipe (14), and is so adapted that nodes appear at both the ends. Another wave is a gas velocity wave beginning at the exhaust valves (4) and terminating at the annular gable (13) and is so adapted that loops appear at both the ends. These two waves concern the exhaust gases. A third standing wave relates to the loudness level and is adapted to operate between the exhaust valve (4) and said gable (13), having a node at the in-side end (15) of the inner pipe (14).

# EXHAUST SYSTEM FOR A PULSATING HEAT SOURCE

## Technical field

The present invention refers to an exhaust system for a pulsating heat source, especially for an internal combustion engine, as stated in the preamble of the enclosed main claim. The invention is primarily intended for internal combustion engines for motor vehicles, but may advantageously also be used for engines in ships and in aeroplanes or for stationary engines. In the following, however, en exhaust system for an internal combustion engine in a motor vehicle will be described.

The object of an exhaust system is, as is well known, to reduce, where this is desired, the sound level of the exhaust gases coming from a pulsating heat source. Moreover, it is desirable that the exhaust system shall contribute to purifying the exhaust gases and to reducing the discharge of unburned rests and of injurious products.

## Background art

Known exhaust systems do not solve the combination of these problems in a sufficient manner. Thus, they do not, in a dufficiently effective manner, simultaneously succeed in reducing the sound level and in giving a satisfactory purification of the exhaust gases. A step forward, however, to such a solution is the utilization of the principle of standing waves in the exhaust system, giving the possibility of especially improving the sound damping. An example of such a solution is given in the inventor's Swiss patent
specification No. 478 335.

## The invention

The inventor has now, by the present invention, succeeded in essentially improving the results obtained by using
the principle of standing waves.  It has thereby been possible to obtain an improvment both with respect to the sound
damping and the gas purification.

The solution of this problem is, according to the invention, obtained by using the measures stated in the characterizing portion of the enclosed main claim.

According to the invention the distances through the
partial pipes of the manifold of the internal combustion engine from the exhaust valves to a point where they join
each other, a so called junction, or to a connecting flange
or the like on said manifold should be made substantially
equal in length.  From said junction one single exhaust pipe
of uniform thickness continues and has an inner sectional
area which is four times or somewhat less the sectional area
of an exhaust channel in the engine.  The exhaust pipe is
terminated by an annular gable, in which a short inner pipe
is inserted.  The inner sectional area of the inner pipe is
substantially equal to the area of an exhaust channel in the
engine, and its length must be substantially equal to the
distance from a point in the engine somewhat below the bottom dead centre of a piston in a cylinder to said junction
of the partial pipes in the manifold.  It should, thus, be
observed that the exhaust system is considered to begin at
said point below the bottom dead centre for a piston and
that its termination is constituted by the outer end of the
inner pipe.

It is important according to the invention that the exhaust system is so dimensioned that three distinct standing
waves are formed therein.  Through the combustion in the
cylinders and through the ejector effect at the exhaust
valves and at the said junction of the partial pipes in the manifold a low pressure wave will arise which is tuned to form an even number of half-periods of a standing wave between said point somewhat below the bottom dead centre for a piston in a cylinder of the engine and the in-side end of the inner pipe. Due to the process of combustion in the engine a rotating gas wave is generated at the exhaust valves. Said gas wave is tuned to form an even number of periods of a standing wave between the exhaust valves and the inner wall of the terminating gable of the exhaust pipe, whereby loops should be formed at the ends of the standing wave. Said gas wave serves to propel the gas in the exhaust system. Finally, a standing sound wave is generated in the exhaust system between the exhaust valves of the engine and the inner wall of the terminating gable of the exhaust pipe, which wave should have a node at the inside end of the inner pipe.

By means of such an exhaust system the desired advantages are attained. The arising of said advantages may be explained in the following way:

Due to the ejector effect obtained when an exhaust valve is opened and in the transition region from the partial pipes of the manifold to the exhaust pipe, the exhaust gases from each cylinder in the engine will be exhausted very efficiently. Since the exhaust pipe does not produce any resistance to the exhaust gases owing to the tuning performed, each cylinder will be completely emptied under the influence of a vacuum being generated by said ejector effect. Said vacuum will be active during the whole working process of the exhaust valve. Thereby, when the inlet valves open, the subsequent filling of the cylinders will be improved. An increased filling degree will be obtained compared with what is possible in previously known engines. The amount of fuel fed to the cylinders will almost correspond to the amount of oxygen in the air supplied to the engine. An overdosage of fuel for the purpose of cooling the combustion chamber, as has previously been usual, will not be necessary any longer. Since the cylinder has a negative pressure when the exhaust valve is closing (about 0.5 at), a filling will moreover be obtained without the previously occuring delay caused by the overpressure (about 4 at) in the cylinder. Since no exhaust gas rests remain in the cylinder when the subsequent filling occurs, and the fuel mixture supplied will thus be almost ideal, a higher combustion temperature (1250 $^{\circ}$C against previously 890 $^{\circ}$C) will be obtained and may also be permitted. A complete combustion will be obtained, and, consequently, no soot, no carbon monoxide, no nitric oxides, no nitrous gases and not even any water vapour. This constitutes an advantage, since, for instance, no deposit of soot is obtained in the cylinders and on the ignition plugs, and no water vapour is supplied to the exhaust system.

The vacuum developed during the exhaust phase will contribute to a rapid cooling of the walls of the combustion chamber (to about 700 $^{\circ}$C), which is one of the explanations why a higher combustion temperature may be permitted. The negative pressure will also, as has been mentioned above, cause a better filling, and the lower temperature obtained in the cylinder after the combustion process will cause a better compression of the subsequently supplied fuel mixture.

Said negative pressure is caused by the tuned exhaust gas system. By means thereof the negative pressure wave will be forced to operate already from a point below the bottom dead centre of the piston. The exhaust system will, due to the better emptying, the better filling by a correctly adapted fuel-air mixture and the more complete combustion process only obtain pure exhaust gases, which do not have any measurable quantities of inconvenient gases, such as carbon monoxide and nitrous gases and water vapour. Only the lead compounds existing in the fuel, such as tetraethyl lead, will be propelled through the exhaust system, but will be deposited on the inner envelope surface of the exhaust pipe due to the turbulence of the exhaust gases.

An engine provided with the new exhaust system will give the engine increased power, due to the co-operating causes stated above. The more complete, hotter combustion combustion process in the cylinders contributes thereto and permits a higher piston pressure. The combustion will be completely finished before the piston has reached its lower piston position. Moreover, the fuel will be better utilized. No exhaust gas rests will appear which could carry off heat, neither in the cylinders nor in the exhaust pipe. An important reason is that the exhaust system works with a sucking negative pressure, making the favourable temperature conditions in the cylinder possible. Said negative pressure also contributes to a rapid cooling of the exhaust gases and this is the reason why no power consuming overcoming of a counter pressure in the exhaust system occurs. Altogether, said improving effects allow an increased engine power of about 30 per cent.

The very good sound damping is obtained due to the fact that the negative pressure in the exhaust system is a bad conductor of sound, and that no unburnt sound conducting gas rests can occur, and that the standing sound wave has a node at the in-side end of the inner pipe, where the exhaust gases leave the exhaust system. Simultaneously, the velocity of the driving gas wave has a maximum point just before said in-side end of the inner pipe.

Detailed description

In the following description a nearer explanation of the invention will be given in connection with the Figures on the attached drawings. On said drawings Fig. 1 diagrammatically illustrates an internal combustion engine having a manifold from the exhaust valves, and an exhaust pipe connected to the manifold according to the invention. Fig. 2 shows the exhaust system still more skeletonized. Figs. 3, 4 and 5 illustrate the standing waves typical for the exhaust system according to the invention. Thus, Fig. 3 shows a standing negative pressure wave for the exhaust gases in the system, Fig. 4 shows a standing turbulent gas wave for propelling the exhaust gases in the system, and Fig. 5 shows a standing sound wave in the system. Figs. 6, 7 and 8 illustrate, in a very diagrammatical way, the exhaust system with the three standing waves.

A part of a combustion engine 1 is illustrated diagrammatically in perspective by a sectional view through a cylinder 2. The engine may have a random number of cylinders, and there is no limitation to the two cylinders indicated by solid lines and the third cylinder indicated by dashed lines. Normally, the engine has four or six cylinders. Each cylinder has an inlet valve 3, an exhaust valve 4 and a piston 5, the latter being in a conventional manner connected to a crankshaft 6 via a piston rod 7. The exhaust channel 8 of each cylinder is connected to a partial pipe 9 in a manifold 10 for the engine. An exhaust pipe 12 is connected to a flange 11 or the like on the manifold 10. The exhaust pipe 12 can be comparatively thin-walled and can, if so is desired, be bent. Its length shall be adapted in accordance with the requirements stated by the invention. The exhaust pipe 12 is terminated by an annular gable 13, in which a comparatively short inner pipe 14 is inserted. The exhaust pipe 12, the gable 13 and one end of the inner pipe are gas-tight joined to each other, for instance by welding. Gas escape from the exhaust pipe 12 is thus made possible solely through the inner pipe 14. If necessary, appropriate supports may be arranged between the in-side - end 15 of the inner pipe and the inner envelop surface of the enclosing exhaust pipe. To the outer envelop surface of the last mentioned pipe one or more fastening means can be attached for mounting the exhaust system under the motor vehicle. The dimensioning of the inner pipe should also meet the requirements by the invention.

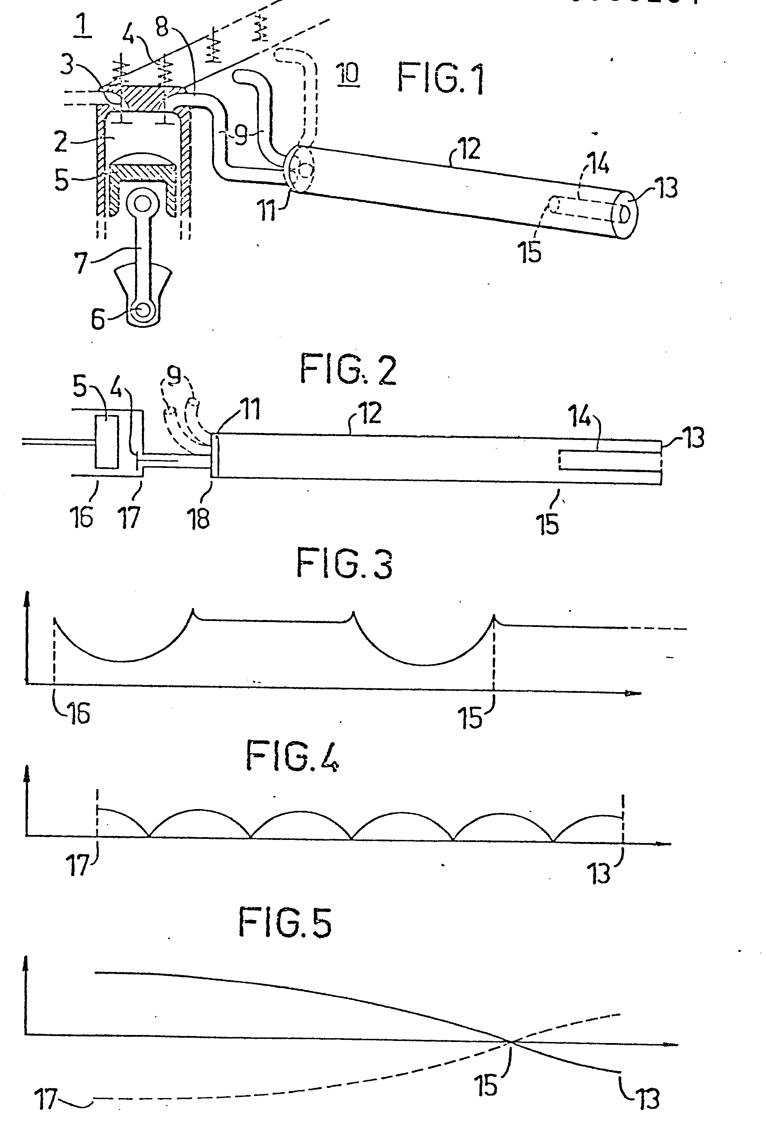

In Fig. 2 the exhaust system is further skeletonized in order to facilitate the explanation of the mode of operation of the invention. From the left-hand side one recognizes the piston 5 of the engine, the exhaust valve 4, the partial pipes 9 of the manifold 10, the junction 11 (the flange) between the manifold and the exhaust pipe, the exhaust pipe 12, the inner pipe 14 and the gable 13 at the terminating end of the exhaust pipe.

The designations below Fig. 2 indicate reference points for the description of the oscillation waves in the exhaust system. Thus, number 16 indicates the point which is said to be situated somewhat below the bottom dead centre of the piston 5. Number 17 indicates the valve seat 17 for one of the exhaust valves 4. Number 18 indicates the junction between the partial pipes 9 in the manifold 10, i.e. substantially the connecting flange 11. Number 15 indicates the free in-side end of the inner pipe 14, and number 13 indicates, as mentioned above, the free gable end of the exhaust pipe.

In Fig. 3 a diagram is shown of the gas pressure in the exhaust system as a function of its length. The curve indicates a negative pressure curve and shows its course from an initial point 16 with principally atmospheric pressure at said point below the bottom dead centre of the piston 5, to an illustrated end point 15, positioned at the in-side end of the inner pipe 14. The distance between the initial point 16 and the end point 15 is so selected that a standing wave arises which must have nodes at the terminal points. According to gas flow laws the curve will mainly obtain the course illustrated, having a so-called dead zone along the central portion. At the beginning and at the end of the curve a marked negative pressure is obtained, caused by the ejector effect at the exhaust valves 4 and at the junction at the flange 11 and being periodically repeated after said dead zone.

For propelling the gas along the exhaust pipe 12 a standing gas wave is arranged according to Fig. 4. The velocity of said wave, as a function of the length of the exhaust system, is shown by the illustrated periodic curve. Said curve shall have a loop at the initial point 17, corresponding to the wave generating exhaust valves 4, and a loop at the end point, i.e. at the gable 13 of the exhaust pipe. By tuning the standing wave course one can achieve that the exhaust gases obtain a required escape velocity, especially at the in-side end 15 of the inner pipe 14. This explains the importance of the inserted inner pipe, which must have a length substantially corresponding to the distance between the points 16 and 18, defined according to Fig. 2, and an inner cross-section which is substantially equal to the cross-section of an exhaust channel in the engine block. The combined effect of the curves according to Figs. 3 and 4 gives the favourable course of the gas flow described above.

A very low sound level is obtained by the new exhaust system, and the curve according to Fig. 5 shows the loudness level as a function of the length of the exhaust system. Even this curve represents a standing wave which is tuned to be formed between the point 17, i.e. the sound generating exhaust valves 4, and the point 13, i.e. the gable 13 of the exhaust pipe, and so that a node is obtained at the point 15, i.e. at the in-side end 15 of the inner pipe. The wave is reflected at the gable 13 of the exhaust pipe and passes the same point 15, where the gas escaping from the inner pipe has the lowest loudness level

The above mentioned is, in principle, valid for the fundamental tone, for which a good sound damping is obtained. Since the sound wave, however, contains harmonics, it might be necessary, for certain applications, to attain a further damping of said harmonics. This can be achieved thereby, that the exhaust pipe 12 is extended beyond the gable 13 and is terminated by a further gable, in which an inner pipe corresponding to the inner pipe 14 and having substantially the same length is inserted in the same way as the inner pipe 14. The further gable should preferably be situated about a quarter sound wave length from the in-side end 15 of the inner pipe 14.

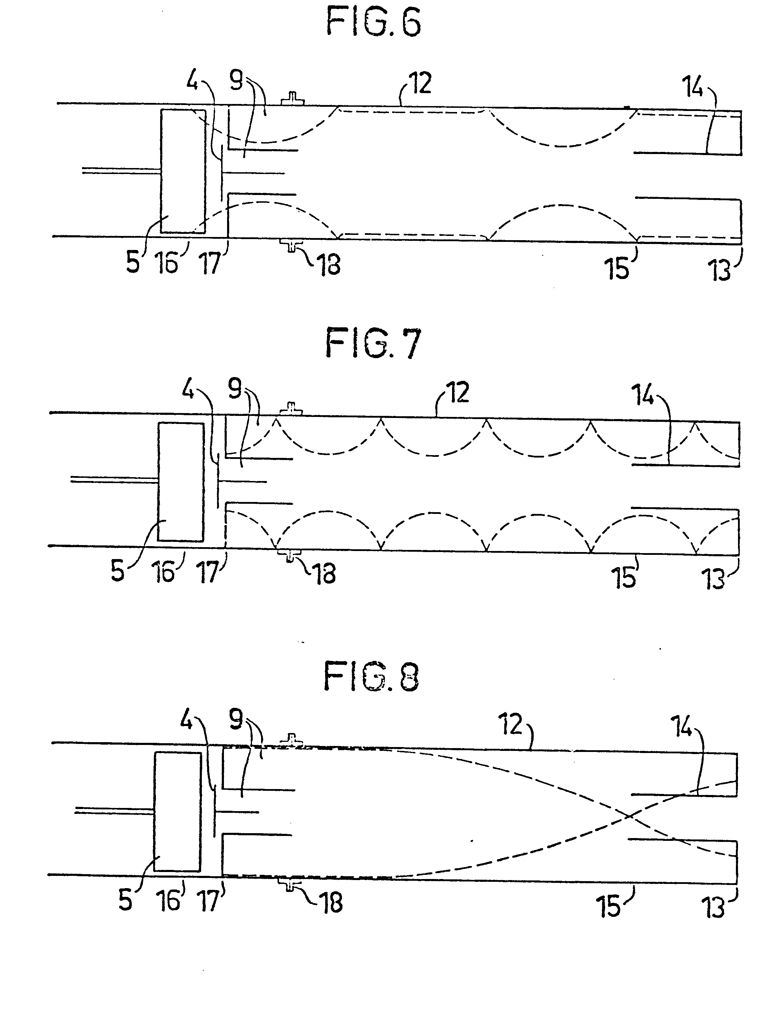

The standing waves thus described: the negative pressure wave of the gas and its propelling wave and the sound wave, are illustrated once more separately in the new exhaust system according to Figs. 6 to 8. In said Figures an exhaust system is diagrammatically shown having the piston 5, the exhaust valve 4, the partial pipe 9 of the manifold, the exhaust pipe 12, the inner pipe 14 and the end gable 13. Below each Figure the previously mentioned designation numbers are given. The junction between the manifold and the exhaust pipe is represented by a flange 18. In Fig. 6 the negative pressure wave is shown with its initial point somewhat below the piston 5, which is shown in its bottom dead centre position. In Fig. 7 the propelling gas wave between the exhaust valve 4 and the end gable 13 is shown. In Fig. 8 the sound wave between the exhaust valve 4 and the end gable, with the node at the in-side end 15 of the inner pipe 14, is presented.

The new exhaust system has been experimentally tested and its good properties stated above have been fully confirmed. It has then been apparent that the appearing waves substantially have the illustrated and described courses. The theory lying behind the courses of the curves is very complicated, and therefore the experimental results obtained are presented here.

Claims

1.     An exhaust system for a pulsating heat source,
especially an internal combustion engine, said system uti-
lizing standing waves, c h a r a c t e r i z e d  in that:
   A. the partial pipes (9) that are parts of the manifold
(10) of the engine (1) are given substantially equal length
and equal inner sectional area from the exhaust valve (4) of
each cylinder (5) in the engine to a junction (11) of the
partial pipes of all cylinders;
   B. an exhaust pipe (12), having an inner sectional area
which is substantially equal to the sectional area of an exhaust channel (8) in the block of the engine (1) multiplied
by approximately 4, is attached at the junction (11) of said
partial pipes (9);
   C. the exhaust pipe (12) is terminated by an annular gable
(13), in a hole of which a substantially concentric inner
pipe (14) with a smaller diameter than said exhaust pipe is
inserted in the exhaust pipe;
   D. the length of the inner pipe (14) in said exhaust pipe
(12) is substantially equal to the distance from a point
somewhat below the bottom dead centre for a piston (5) in
the engine (1) to the junction (11) for the partial pipes
(9) in the manifold (10);
   E. the length of the exhaust system is equal to the distance from the point somewhat below the bottom dead centre
for a piston in the engine to the in-side end (15) of the
inner pipe (14) plus the length of said inner pipe;
   F. a standing negative pressure wave, being generated by
the combustion in the cylinders and by the ejector effect
at the exhaust valves (4) and at the junction (11) for the
partial pipes in the manifold (10), is adapted to operate
between the end points of said distance by selecting it to
correspond to an integer multiple of the half period length
of the negative pressure wave, and is arranged to have nodes
at said end points;
   G. a standing around a central axis of the exhaust pipe
(12) rotating gas wave, serving to propel the exhaust gas in said standing negative pressure wave through the exhaust
system, is generated by the combustion process in the engine
and is formed between the exhaust valves (4) and the inner
surface of the annular gable (13) of the exhaust pipe (12)
by adapting it to have an even number of oscillation waves
and to have loops at the exhaust valves (4) and at the gable
(13);

   H. a standing sound wave is generated in the exhaust system between the exhaust valves (4) of the engine (1) and
the inner surface of the annular gable (13) of the exhaust
pipe (12), and is adapted to have a node at the in-side
end (15) of the inner pipe (14).

     2.     An exhaust system according to claim 1,
c h a r a c t e r i z e d  in that the inner sectional area
of the inner pipe (14) is substantially equal to the sectional area of an exhaust channel (8) in the block of the en-
gine (1).

---------

0008281

FIG.1

λ/2

FIG. 2

FIG.3

FIG.4

FIG.5

FIG.6

FIG.7

FIG.8

# EUROPEAN SEARCH REPORT

European Patent Office

Application number

EP 79 85 0064

| | DOCUMENTS CONSIDERED TO BE RELEVANT | | CLASSIFICATION OF THE APPLICATION (Int. Cl. ⁴) |
|---|---|---|---|
| Category | Citation of document with indication, where appropriate, of relevant passages | Relevant to claim | |
| | FR - A - 2 283 312 (YAMAHA) <br> * Page 4, line 5 to page 8, line 19; figures 1 to 4 * <br> -- | 1 | F 01 N 1/06 <br> 1/00 <br> F 02 B 27/04 |
| D | CH - A - 478 335 (ANDERSSON) <br> * Column 1, line 34 to column 3, line 19; figures 1 to 3 * <br> -- | 1 | |
| | DE - C - 760 421 (M.A.N.) <br> * Page 2, lines 24-63; figure 1 * <br> -- | 1 | **TECHNICAL FIELDS SEARCHED (Int.Cl. ³)** <br><br> F 01 N <br> F 02 B |
| A | FR - A - 1 094 694 (EBERSPÄCHER) | | |
| A | GB - A - 971 405 (FORD) <br><br> ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 04-10-1979 | HAKHVERDI |

EPO Form 1503.1 06.78